# EUROPEAN PATENT SPECIFICATION

(11) **EP 1 428 851 B1**
(45) Date of publication and mention of the grant of the patent: **16.04.2008**
(21) Application number: 03253599.9
(22) Date of filing: 06.06.2003
(51) Int. Cl.: C08H 5/04, C14C 3/12

(54) **A process for modification of the physical and chemical properties of a plant extract of acacia mimosa, a modified plant extract, and use of a chemically modified plant extract**
Verfahren zur Modifizierung der physikalischen und chemischen Eigenschaften eines Acacia Mimosa-Pflanzenextrakts, ein modifizierter Pflanzenextrakt, und Verwendung eines chemisch-modifizierten Pflanzenextrakts
Procédé de modification des propriétés physiques et chimiques d'un extrait vegetal de acacia mimosa, un extrait vegetal modifié et utilisation d'un extrait vegetal modifié chimiquement

(30) Priority: 09.12.2002 BR 0204998
(43) Date of publication of application: 16.06.2004
(73) Proprietor: Tanac S.A., 95780-000 Montenegro, RS (BR)
(72) Inventor: Lamb, Luiz Henrique, 95840-000, Triunfo, RS (BR); Decusati, Otavio, 95780-000 Montenegro, RS (BR)
(74) Representative: Daniels, Jeffrey Nicholas

(56) References cited:
- WO-A-02/38813
- GB-A- 144 677
- US-A- 1 390 205
- US-A- 1 965 061
- KASPAR, H.R.E., PIZZI, A.: "Industrial plasticizing/dispersion aids for cement based on polyflavonoid tannins" J. APPL. POLYM. SCI., vol. 59, no. 7, 14 February 1996 (1996-02-14), pages 1181-1190, XP002258824
- HEMINGWAY, R. W.: "Opportunities to use bark polyphenols in specialty chemical markets" WOOD RESIDUES INTO REVENUE, RESIDUAL WOOD CONFERENCE PROCEEDINGS, November 1997 (1997-11), pages 80-85, XP002258825

## Description

### Field of the Invention

The present invention refers to a process for modifying the physical and chemical properties of the extract obtained from Acacia Mimosa, obtained from the Acacia Negra (black green-wattle acacia), to render the same more astringent and acid for the use thereof in the processes of tanning and retanning of hides as with an a hydrolizable or pyrogallic extract maintaining the desired characteristics of the extract of Acacia Mimosa.

### Background of the Present Invention and Prior Art:

The process of transformation of hides into leather is one of the oldest human activities, existing since prehistoric times, when the hides were used as clothing for protection against the cold.

The first tannage, which is the process for transforming the hide, a putrescible material, in leather, a material that is stable and resistant to microorganisms, probably happened by chance. Some hides may have been placed in contact with tannin-rich plants, and the tanning may have been caused thereby through the action of rainfall.

In the present days, the hide tanning industry uses advanced technologies, thereby allowing to achieve a high level of productivity. To this end, among other aspects, there contribute the so called tanning agents, which are substances of plant, mineral or synthetic origin that will interact with the collagen fibers of the hide, thereby promoting the tanning thereof.

Among the tanning agents, there should be pointed out the mineral agents, such as chrome salts, and particularly chrome sulfate. The synthetic agents are basically comprised by naphthalene sulphonic acids or salts and compounds derived from carboxylic acid. In the category of tanning agents obtained from plants, a great variety of plants evidence the presence of substances with tanning properties.

The presence of tanning substances occurs in practically every plant in the vegetable kingdom, and especially in the superior plants. The localization of the tannin in the plants is equally varied, as it may be present in the trunk, the leaves, the bark and the roots. The occurrence thereof takes place in isolated cells or in cell groups, or yet in special cavities of the plant, and it commonly occurs in the cytoplasm of the plant cells.

The various plant extracts provide to the final products of tannage of hides, the tanned leathers, several characteristics according to the plant wherefrom the plant extracts were obtained.

However, the amount of plant species which are economically feasible to exploit is very restricted, and depending on the species the amounts of tannins present therein, as well as the characteristics of such tannins and the conditions related to the plant exploitation itself, may exhibit variation.

Among the main species there are included the Acacia Mimosa (*Acacia mearnsii* de Wild), the Quebracho (Schinopsi lorentzi), the Chestnut (*Castanea Vesca*), zumagre, gambir among others. Of these, only the Acacia Mimosa has a production system exclusively based on plants obtained by reforesting methods.

Chemically, the tannins are classified in two groups, according to their chemical structure: (i) the condensed tannins and (ii) the hydrolyzable tannins.

The tannins classified as condensed tannins are also called catecholic tannins or phlobatannins. They are comprised of flavonoid units of the type flavan 3,4-diol and flavan 3-ol, with various degrees of polymerization therebetween. When treated with strong acids under heat, they start a progressive polymerization process, up to complete polymerization, originating amorphous tannins, known as phlobaphenes. The extracts of Acacia Mimosa are characteristic examples of catecholic type tannins or phlobatannins.

The process of chemical modification of the extracts of Acacia Mimosa has carried out for many years, using sulphites and bisulphites usually in the form of sodium salts, for the purpose of altering the solubility of the extracts and particularly the color of these extracts.

Regarding past developments, the present inventors may cite as prior art examples the following papers: Belavsky, E. - O Curtume no Brasil (Tannage in Brazil) - Porto Alegre, Editora Globo, 1965; Bienkiewica, K - Physical Chemistry of Leather Making - Robert E. Krieger Publishing Co., Inc. - USA, 1993; Hoinacki, E. - Peles e Couros (Skins and Hides) - 2a Edição (2nd Edition), SENAI / RGS - Porto Alegre, 1989; Howes, F. N. - Vegetable Tanning Materials, London, Butterworths Scientific Publications, 1953; Leather Industries Research Institute - Wattle Tannin and Mimosa Extract - Grahamstown, South Africa, 1955; Mugica, M. G. & Ochoa, J. T. Los Taninos Vegetales (Plant-Derived Tannins), Madrid, Instituto Florestal de Investigaciones Y Experiencias, 1969; O'Flaherty, F.; Reddy, W.T.; Lollar , R. M. - The Chemistry and Technology of Leather - Vol. IV - Evaluation of Leather - Reinhold Publishing Corporation, New York, 1965; Pizzi, A. - Wood Adhesives - Chemistry and Technology - Marcel Becker, Inc. - New York, 1983; Sherry, S. P. - The Black Wattle - University of Natal Press - South Africa, 1971; TEPF - Tanning Extract Producers Federation - A Survey of Modem Vegetable Tannage - England, 1974.

According to Pizzi, in Wood Adhesives - Chemistry and Technology - 1983, the sulphitation of the tannin present in the extracts is one of the oldest and most widely used reactions in flavonoid chemistry. As a rule, the sulphitation provides to the tannins a decrease in viscosity and an increase in solubility. Both these effects are due to the following factors:
1. The elimination of the heterocyclic ether group, which is water-repellent, and as known by the specialists the aqueous extracts of tannin are not actual solutions but rather hydrocolloidal suspensions, wherein a part of the tannin molecule maintains the tannin solubilized while the other part tends to separate the tannin from the solution.
2. The introduction of the sulphonic group and one other hydroxyl group, both hydrophilic.
3. Decrease in the rigidity of the polymer, an esteric restriction, and the intermolecular hydrogen bonding resulting from the opening of the heterocyclic ring.
4. The acid hydrolysis of the hydrocolloidal starches and the interflavonoid bonds.

The following is a typical reaction in the process according to the present invention:

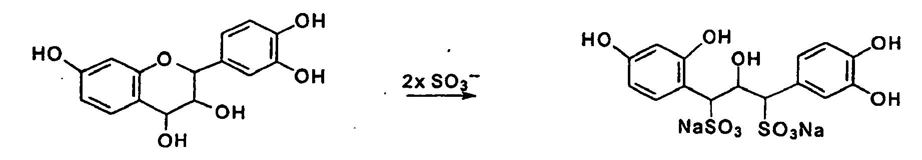

The hydrolyzable or pyrogallic tannins are polyester structures easily hydrolyzable by the action of strong acids or yet of enzymes. As a result of this hydrolysis there are obtained sugars, alcohols and phenol carboxylic acid. The phenol carboxylic acid will dissociate into gallic acid and ellagic acid. The extracts of Chestnut constitute typical examples of hydrolyzable or pyrogallic tannins.

The chestnut extracts of hydrolyzable type are formed by a complex mixture of phenol carbonic acid esters, evidencing a high content of hydroxyls. They usually evidence a tanning rate between about 74 and 78%, by the filter method, with a pH value around 3,3 to 3,7 in a solution at 10% w/v. The presence of a high amount of phenolic hydroxyls in the phenol carboxylic acid esters, together with their natural acidity, due to the presence of the caboxylic acids and the high astringency thereof, makes the pyrogallic extracts evidence a strong binding with the collagen structures, providing leathers that are compact and have smooth grain, small pore size and good hydrophobic properties. The chestnut extract is entirely soluble in water and is highly sensitive to iron salts, forming dark-hued compounds therewith, thus impairing the final appearance of the tanned leathers. Since it is a substantially astringent extract, care should be taken during the tannage process to avoid that the tanning of the fibers adjacent to the surface of the hide, in the grain and flesh layer, might occur first, rendering more difficult the penetration and resulting tannage of the inner part of the hide.

The extracts of Acacia Mimosa, which are of the catecholic tannin or phlobatannin types, are comprised of flavonoid units of the type flavan 3,4-diol and flavan 3-ol, with various degrees of cross-polymerization. The chemical binding between the tannin of this group and the collagen fibers occurs by interactions of the hydrogen binding type, between the phenolic hydroxylic groups and certain groups associated to the polypeptidic chain. Those extracts of the catecholic tannin or phlobatannin types evidence fast penetration into the hide, good dispersion among the collagen fibers, high resistance to electrolytes, a tanning rate of about 70 to 74 %, a rate of non-tanning fraction of about 20 to 25%, an astringency of about 3.5 (ratio of tanning agents to non-tanning matter) and a pH value of about 4.8 to 5.2.

### The Present Invention:

The present invention refers to the provision of a plant extract of Acacia Mimosa, chemically modified to assume acid and astringent characteristics, by means of a process of sulphonation of the extract of Acacia Mimosa in natura, using a sulphonation agent such as the sulphonic acid, the sulphuric acid and the naphthalene sulphonic acid, among others, at specific temperatures and pressures. The modified extracts thus obtained are able to replace the pyrogallic plant extracts, such as the chestnut extracts, in the manufacture of tanned leathers.

The modified extracts obtained using the process of the present invention are capable of substituting the pyrogallic plant extracts in the processes for retanning of tanned leathers with chrome salts, or with other plant extracts, such as the extracts of Acacia Mimosa and of Quebracho or even with the synthetic tanning agents such as the aldehydes.

More specifically, the present invention comprises a process for modifying an extract of Acacia Mimosa, whereby the extract is chemically modified for the purpose of rendering the same astringent and acid to be used in tanning and retanning processes of hides. The present process comprises the steps of:
(a) mixing a powdered extract of Acacia Negra with water at a ratio of about 0.5 to 2.0 kg per liter of water, preferably at a ratio of 1.0 to 1.5 kg per liter, and most preferably of 1.05 to 1.06 kg per liter; or
   optionally, using a solution of tannin in liquid form in a concentration of 25% to 60%, preferably in a concentration of 45% to 55%, and most preferably in a concentration of 50% of total solids content;
(b) heating the mixture thus formed while vigorously stirring the same at a temperature between 50 and 100° C, preferably between 67 and 98° C;
(c) slowly adding a sulphonation agent to the heated mixture, at a ratio by weight of about 1/100 to about 1/20 to the extract of Acacia Negra; and
(d) raising the temperature of the mixture to a range between 45 to 135° C, maintaining a pressure between 0.2 kgf/cm² and 7 kgf/cm² for a period comprised between 1 and 14 hours to complete the sulphonation of the tannin.

The sulphonation agent of the process according to the present invention may be selected from sulphonic acid, sulphuric acid, naphthalene sulphonic acid or mixtures thereof and similar agents.

The modified extract obtained using the process according to the present invention exhibits enhanced acid and astringent characteristics with acid rates in the range from 35 to 90 meq H⁺.

The process according to the present invention may additionally comprise a step of addition of an aluminum compound selected from aluminum sulfate, aluminum chloride, aluminum hydroxide, or mixtures thereof, the preferred aluminum compound being the aluminum hydroxide.

### Objects and Variations of the Process According to the Present Invention:

One objet of the present invention is therefore to provide a process for modifying the physical and chemical characteristics of the extracts obtained from Acacia Mimosa, allowing the use thereof for tannage of leathers, and allowing to obtain final products that up to this point have been exclusively produced using pyrogallic type extracts.

More specifically, the present process for physical and chemical modification of the extract of Acacia Mimosa enables the practical use thereof in leather tannage, there being obtained thereby end products that up to this point have been exclusively produced using pyrogallic type extracts and having the advantage of maintaining the desired characteristics that are typically obtained by using the extract of Acacia Mimosa.

The process according to the present invention allows the use of the extract of Acacia Mimosa obtained from fully renewable sources, in articles usually manufactured with raw materials from non-renewable plant sources, such as pyrogallic extracts.

The process according to the present invention allows the preparation of a plant extract of Acacia Mimosa that is physically and chemically modified to assume acid and astringent characteristics that are desirable and advantageous both from the economic and the technical points of view, for the product thus obtained.

The preparation of a plant extract of Mimosa, chemically modified to assume acid and astringent characteristics according to the present invention, is developed by means of a process involving a sulphonation reaction of the normal extract of Acacia Mimosa, using sulphonic acid, sulphuric acid, or naphthalene sulphonic acid, among other similar reagents, the reaction being carried out under controlled temperatures and pressures.

The preparation of the plant extract of Acacia Mimosa, chemically modified according to the present invention, for the purpose of such extract assuming acid and astringent characteristics, is performed by means of a process of sulphonation of the normal extract of Acacia Mimosa that may be carried out using naphthalene sulphonic acid and an aluminum salt, such as aluminum sulfate, under controlled temperatures and pressures.

The preparation of a plant extract of Mimosa, chemically modified according to the present invention to assume the desired acid and astringent characteristics, may be achieved using a sulphonation process applied to the normal extract of Acacia Mimosa, using naphthalene sulphonic acid under controlled temperatures and pressures, in order to provide thereby an extract capable of substituting the pyrogallic plant extracts, such as chestnut extracts, in the manufacture of vegetable-tanned leathers, vegetable-tanned heavy leathers and shoe sole materials.

The preparation of a plant extract of Mimosa, chemically modified according to the present invention, is achieved using a process for sulphonation of the normal extract of Acacia Mimosa, using naphthalene sulphonic acid under controlled temperatures and pressures, and in conditions allowing the provision of a product capable of substituting the pyrogallic plant extracts, such as chestnut extracts, in the manufacture of chrome-tanned and vegetable-retanned leathers, and in the manufacture of chrome-tanned and vegetable-retanned leathers with hydrofuge characteristics.

Another object of the present invention is to provide a modified plant extract with characteristics that are superior to those of the natural extract for treating skins and hides, selectively obtained using the sulphonation process according to the present invention.

A further object of the present invention consists in providing in an advantageous manner the use of a chemically modified plant extract obtained from Acacia Mimosa or other plants to be used as an agent in the process of tannage and retanning of skins.

As a result of the process for modification of the physical and chemical properties of the molecules of tannin present in the extracts according to the present invention, and according to the operating variants pointed out above and the objects to be fulfilled, there is obtained the modified polymeric compound of Formula (II), derived from the monomer of Formula (I), both represented as follows: 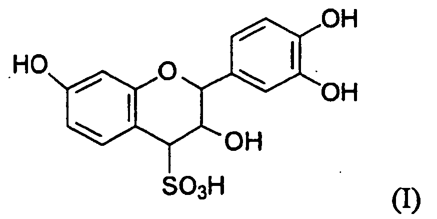 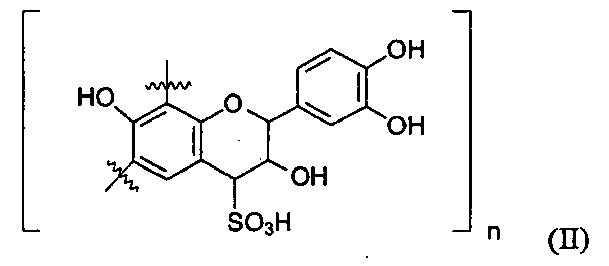 where n varies from 3 to 7.

The polymeric compound of Formula (I) obtained using the process according to the present invention was physically and chemically analyzed, the results being shown in Table I below:

**Table I: TYPICAL ANALYSIS**

| | Commercial Extract of Acacia Mimosa | Modified Extract of Acacia Mimosa according to the present invention |
|---|---|---|
| Tanning Agent (%) | 72.0 | 70 to 80 |
| Non-Tanning Matter (%) | 21.0 | 10 to 15 |
| Non-Soluble Matter (%) | 1.0 | 0 to 2.5 |
| Humidity (%) | 6.0 | 5.0 to 7.0 |
| pH | 4.5 - 5.0 | 1.5 to 3.5 |
| Acids (meq H⁺) | 16.9 | 35 to 90 |
| Salts | 65.9 | 35 to 90 |
| Astringency | 3.6 | 4.0 to 8.0 |

The inventors found out that the process for modification of natural extracts of Acacia Mimosa according to the present invention provides a modified extract with superior properties for the tannage of skins, comprising modified tanning compounds and higher acid content and increased astringency.

The modified plant extract obtained using the process according to the present invention preferably exhibits the characteristics presented in Table II:

**Table II: TYPICAL ANALYSIS**

| | Extract of Mimosa | Modified Mimosa Extract |
|---|---|---|
| Tanning Agent (%) | 72.0 | 76.5 |
| Non-Tanning Matter (%) | 21.0 | 15.3 |
| Non-Soluble Matter (%) | 1.0 | 2.1 |
| Humidity (%) | 6.0 | 6.0 |
| pH | 4.5 - 5.0 | 2.5 - 3.2 |
| Acids | 16.9 | 42.1 |
| Salts | 65.9 | 46.5 |
| Astringency | 3.6 | 5.00 |

### Practice of the Present Invention:

### Example 1:

There was used a vessel of stainless steel or carbon steel coated with glass, with a capacity of 8,000 liters, provided with a cooling system and also a heating system by means of a steam coil or a jacket, and the conditions required to achieve a pressure of 9 kgf/cm².

An amount between 1,879 liters and 3,420 liters, preferably 2,750 liters, of water, was added under stirring to an amount between 1,976 kg and 3,890 kg, or optimally a quantity of 2,915 kg of a powdered extract of Acacia Negra, or a plant extract of Acacia Mimosa in liquid form, in a concentration established between 45% and 55% by weight of total solids, preferably 50% by weight of total solids.

This mixture was heated with heating provided by a steam coil or jacket, under intense stirring, until reaching the temperature of 67 to 98° C, and preferably of 84° C.

To this heated mixture there was slowly added sulphonic acid in an amount between 64 kg and 345 kg, preferably in an amount of 187 kg.

The cooling system must be open such as to avoid that the temperature exceeds 65° C, due to the risk of formation of precipitates of polymerized material.

The temperature of the mixture was raised, the reaction medium being kept heated between 45° C and 127° C, and normally, at 95° C. The pressure was comprised between 0,2 kgf/cm² and 7 kgf/cm².

The system is kept in reaction until the conclusion of the process of sulphonation of the flavan 3,4-diol, a period that usually varies from 2 hours to 18 hours.

The final product has a lower pH value than the normal extracts of Acacia Negra and total solubility in cool water.

### Example 2:

There was used a vessel of stainless steel or carbon steel coated with glass, with a capacity of 8,000 liters, provided with a cooling system and also a heating system by means of a steam coil or a jacket, and the conditions required to achieve a pressure of 9 kgf/cm².

An amount between 1,650 liters and 3,833 liters, preferably 2,935 liters, of water, was added under stirring to an amount between 1,900 kg and 3,990 kg, or optimally a quantity of 2,450 kg of a powdered extract of Acacia Negra.

This mixture was heated with heating provided by a steam coil or jacket, under intense stirring, until reaching the temperature of 67 to 98° C, and preferably of 84° C.

To this heated mixture there was slowly added sulphuric acid in an amount between 230 kg and 680 kg, preferably in an amount of 325 kg.

The cooling system must be open such as to avoid that the temperature exceeds 45° C, there being prevented thereby the formation of precipitates of material that may eventually polymerize.

The temperature of the mixture was slowly raised, the system being kept heated between 35° C and 137° C, and normally, at a temperature of 105° C. The pressure should be comprised between 0,2 kgf/cm² and 7 kgf/cm².

The system is kept in reaction until the conclusion of the process of sulphonation of the flavan 3,4-diol, a period usually varying between 3 hours and 8 hours.

The final product exhibited an acid pH value, below 3.5.

### Example 3:

There was used a vessel of stainless steel or carbon steel coated with glass, with a capacity of 8,000 liters, provided with a cooling system and also a heating system by means of a steam coil or a jacket, and the conditions required to achieve a pressure of 9 kgf/cm².

An amount between 1,870 liters and 3,420 liters, preferably an amount of 2,750 liters, of water, was added under stirring to an amount between 1,976 kg and 3,890 kg, or optimally a quantity of 2,915 kg of a powdered extract of Acacia Negra, or a plant extract of Acacia Mimosa in liquid form, in a concentration established between 45% and 55% by weight of total solids, preferably 50% by weight of total solids, and in an amount between 3,846 kg and 7,310 kg, preferably in an amount of 5,665 kg.

This mixture was heated with heating provided by a steam coil or jacket, under intense stirring, until reaching the temperature of 67 to 98° C, and preferably of 84° C.

To this heated mixture there was slowly added naphthalene sulphonic acid in an amount between 27 kg and 215 kg, preferably in an amount of 67 kg.

The temperature of the mixture was raised, the same being kept heated between 45° C and 127° C, and normally, at a temperature of 105° C. The pressure of the system was comprised between 0,2 kgf/cm² and 7 kgf/cm².

The system was kept in reaction to conclude the process of sulphonation of the flavan 3,4-diol, for a period usually varying between 1 hour and 14 hours.

The final product exhibited a pH value lower than that of the normal extracts of Acacia Negra and total solubility in cool water.

### Example 4:

There was used a vessel of stainless steel or carbon steel coated with glass, with a capacity of 8,000 liters, provided with a cooling system and also a heating system by means of a steam coil or a jacket, and the conditions required to achieve a pressure of 9 kgf/cm².

An amount between 1,870 liters and 3,420 liters, preferably an amount of 2,750 liters, of water, was added under stirring to an amount between 1,976 kg and 3,890 kg, or optimally a quantity of 2,915 kg of a powdered extract of Acacia Negra, or a plant extract of Acacia Mimosa in liquid form, in a concentration established between 45% and 55% by weight of total solids, preferably 50% by weight of total solids, and in an amount between 3,846 kg and 7,310 kg, preferably in an amount of 5,665 kg.

This mixture was heated with heating provided by a steam coil or jacket, under intense stirring, until reaching the temperature of 67 to 98° C, and preferably of 84° C.

To this heated mixture there was slowly added naphthalene sulphonic acid in an amount between 27 kg and 215 kg, preferably in an amount of 67 kg.

The temperature of the mixture was raised, the system being kept heated between 45° C and 127° C, and normally, at 105° C. The pressure was comprised between 0,2 kgf/cm² and 7 kgf/cm².

The system was kept in reaction to conclude the process of sulphonation of the flavan 3,4-diol, for a period usually varying between 1 hour and 14 hours.

There was added an amount of 21 kg of an aluminum salt, aluminum sulfate, aluminum chloride, or preferably, aluminum hydroxide.

The final product exhibited a pH value lower than that of the normal extracts of Acacia Negra and total solubility in cool water.

After the reaction is completed, the product is cooled and discharged, and may be packaged in liquid form, or it may be conveyed to a spray drier-or atomizing drying system.

The products obtained in the examples above exhibited the following characteristics:

The powders or liquids obtained by means of the process of sulphonation of an aqueous extract of Acacia Negra according to the present invention exhibited high astringency and high tanning agent content. Due to its great affinity with the fibers, these powders or liquids thus obtained warrant a good bonding of the tannin to the skin, providing a high degree of compacting of the fibers and a good yield in weight of the leathers. Such powders and liquids may be used alone or in combination with other vegetable and/or synthetic tanning extracts, both for tannage of shoe sole materials and tanned hides, and for retanning of various leather articles.

## Claims

1. A process for modifying the physical and chemical properties of a plant extract of Acacia Mimosa, for tanning and retanning of hides, **characterized in that** it comprises;
(a) mixing a powdered extract of Acacia Negra with water at a ratio of about 0.5 to 2.0 kg per liter of water, preferably at a ratio of 1.0 to 1.5 kg per liter and most preferably of 1.05 to 1.06 kg per liter; or
optionally, using a solution of tannin in liquid form in a concentration of 25% to 60%, preferably in a concentration of 45% to 55%, and most preferably in a concentration of 50% of total solids content;
(b) heating the mixture thus formed while vigorously stirring the same at a temperature between 50 and 100° C, preferably between 67 and 98° C;
(c) slowly adding a sulphonation agent to the heated mixture, at a ratio by weight of about 1/100 to about 1/20 to the extract of Acacia Negra; and
(d) raising the temperature of the mixture to a range between 45 to 135° C, maintaining a pressure between 0.2 kgf/cm² and 7 kgf/cm² for a period comprised between 1 and 14 hours to complete the sulphonation of the tannin.

2. A process, according to claim 1, **characterized in that** the said ratio of the powdered extract to water is from 1.0 to 1.5 kg per liter of water.

3. A process, according to claim 2, **characterized in that** the said ratio of the powdered extract to water is from 1.05 to 1.06 kg per liter.

4. A process, according to claim 1, **characterized in that** the said solution of tannin in liquid form exhibits a concentration in the range of 45% to 55% of total solids content.

5. A process, according to claim 4, **characterized in that** the said solution of tannin in liquid form exhibits a concentration of 50% total solids content.

6. A process, according to any of claims 1 to 5, **characterized in that** step b) is conducted at a temperature in the range of 67 to 98° C.

7. A process, according to any of claims 1 to 6, **characterized in that** the said sulphonation agent is selected from sulphonic acid, sulphuric acid, naphthalene sulphonic acid or mixtures thereof.

8. A process, according to any of claims 1 to 7, **characterized in that** the said modified extract has enhanced acid and astringent characteristics with acid rates in the range of 35 to 90 meq H⁺.

9. A process, according to any of claims 1 to 8, **characterized by** further comprising the step of addition of an aluminum compound.

10. A process, according to claim 9, **characterized in that** the said aluminum compound is selected from aluminum sulfate, aluminum chloride, aluminum hydroxide, or mixtures thereof.

11. A process, according to claim 10, **characterized in that** the said aluminum compound is aluminum hydroxide.

12. A modified plant extract having acid and astringent properties, **characterized in that** it has the following characteristics:
% of tanning agents: 70 to 80
% of non-tanning matter: 10 to 15
% of non-soluble matter: 0 to 2.5
% of humidity: 5.0 to 7.0 %
pH: 1.5 to 3.5
Acids (meq H⁺): 35 to 90
Salts: 35 to 90
Astringency: 4.0 to 8.0.

13. A modified plant extract, according to claim 12, **characterized in that** it has the following characteristics:
% of tanning agents: 76.5
% of non-tanning matter: 15.3
% of non-soluble matter: 2.1
% of humidity: 6.0
pH: 2.5 to 3.2
Acids (meq H⁺): 42.1
Salts: 46.5
Astringency: 5.0

14. A modified plant extract, **characterized in that** it is obtained using the process as defined in any one of claims 1 to 11.

## Patentansprüche

1. Verfahren zum Modifizieren der physikalischen und chemischen Eigenschaften eines Pflanzenextrakts von Acacia mimosa zum Gerben und Nachgerben von Häuten, **dadurch gekennzeichnet, dass** es umfasst:
(a) Mischen eines pulverförmigen Extrakts von Acacia negra mit Wasser in einem Verhältnis von ca. 0,5 bis 2,0 kg pro Liter Wasser, vorzugsweise in einem Verhältnis von 1,0 bis 1,5 kg pro Liter und am meisten bevorzugt von 1,05 bis 1,06 kg pro Liter; oder,
optional, Verwenden einer Lösung von Tannin in flüssiger Form in einer Konzentration von 25 % bis 60 %, vorzugsweise in einer Konzentration von 45 % bis 55 % und am meisten bevorzugt in einer Konzentration von 50 % des Gesamtfeststoffgehalts;
(b) Erwärmen der so gebildeten Mischung unter kräftigem Rühren derselben bei einer Temperatur zwischen 50 und 100 °C, vorzugsweise zwischen 67 und 98 °C;
(c) langsames Zugeben eines Sulfonierungsmittels zu der erwärmten Mischung in einem Gewichtsverhältnis von ca. 1/100 bis ca. 1/20 zu dem Extrakt von Acacia negra; und
(d) Anheben der Temperatur der Mischung auf einen Bereich zwischen 45 bis 135 °C unter Aufrechterhaltung eines Drucks zwischen 0,2 kgf/cm² und 7 kgf/cm² für einen Zeitabschnitt umfassend zwischen 1 und 14 Stunden, um die Sulfonierung des Tannins zu vervollständigen.

2. Verfahren nach Anspruch 1, **dadurch gekennzeichnet, dass** das Verhältnis des pulverförmigen Extrakts zu Wasser 1,0 bis 1,5 kg pro Liter Wasser beträgt.

3. Verfahren nach Anspruch 2, **dadurch gekennzeichnet, dass** das Verhältnis des pulverförmigen Extrakts zu Wasser 1,05 bis 1,06 kg pro Liter beträgt.

4. Verfahren nach Anspruch 1, **dadurch gekennzeichnet, dass** die Lösung von Tannin in flüssiger Form eine Konzentration im Bereich von 45 % bis 55 % des Gesamtfeststoffgehalts zeigt.

5. Verfahren nach Anspruch 4, **dadurch gekennzeichnet, dass** die Lösung von Tannin in flüssiger Form eine Konzentration von 50 % Gesamtfeststoffgehalt zeigt.

6. Verfahren nach einem der Ansprüche 1 bis 5, **dadurch gekennzeichnet, dass** Schritt (b) bei einer Temperatur im Bereich von 67 bis 98 °C durchgeführt wird.

7. Verfahren nach einem der Ansprüche 1 bis 6, **dadurch gekennzeichnet, dass** das Sulfonierungsmittel ausgewählt ist aus Sulfonsäure, Schwefelsäure, Naphthalinsulfonsäure oder Mischungen hiervon.

8. Verfahren nach einem der Ansprüche 1 bis 7, **dadurch gekennzeichnet, dass** der modifizierte Extrakt verbesserte acide und astringente Charakteristika mit Säureraten im Bereich von 35 bis 90 mVal H⁺ aufweist.

9. Verfahren nach einem der Ansprüche 1 bis 8, **dadurch gekennzeichnet, dass** es ferner den Schritt des Zugebens einer Aluminiumverbindung umfasst.

10. Verfahren nach Anspruch 9, **dadurch gekennzeichnet, dass** die Aluminiumverbindung ausgewählt ist aus Aluminiumsulfat, Aluminiumchlorid, Aluminiumhydroxid oder Mischungen hiervon.

11. Verfahren nach Anspruch 10, **dadurch gekennzeichnet, dass** die Aluminiumverbindung Aluminiumhydroxid ist.

12. Modifizierter Pflanzenextrakt mit aciden und astringenten Eigenschaften, **dadurch gekennzeichnet, dass** er die folgenden Charakteristika aufweist:
| | |
|---|---|
| Gerbstoffe %: | 70 bis 80 |
| Nicht-Gerbstoffe %: | 10 bis 15 |
| Unlösliche Bestandteile %: | 0 bis 2,5 |
| Feuchtigkeit %: | 5,0 bis 7,0 |
| pH: | 1,5 bis 3,5 |
| Säuren (mVal H⁺)_{:} | 35 bis 90 |
| Salze: | 35 bis 90 |
| Astringenz: | 4,0 bis 8,0 |

13. Modifizierter Pflanzenextrakt nach Anspruch 12, **dadurch gekennzeichnet, dass** er die folgenden Charakteristika aufweist:
| | |
|---|---|
| Gerbstoffe %: | 76,5 |
| Nicht-Gerbstoffe %: | 15,3 |
| Unlösliche Bestandteile %: | 2,1 |
| Feuchtigkeit %: | 6,0 |
| pH: | 2,5 bis 3,2 |
| Säuren (mVal H⁺): | 42,1 |
| Salze: | 46,5 |
| Astringenz: | 5,0 |

14. Modifizierter Pflanzenextrakt, **dadurch gekennzeichnet, dass** er mittels des in einem der Ansprüche 1 bis 11 definierten Verfahrens erhalten wird.

## Revendications

1. Procédé de modification des propriétés physiques et chimiques d'un extrait végétal d'Acacia Mimosa, pour le tannage et le retannage des peaux, **caractérisé en ce qu'**il comprend :
(a) le mélange d'un extrait poudreux d'Acacia Negra avec de l'eau à un rapport d'environ 0,5 à 2,0 kg par litre d'eau, de préférence à un rapport de 1,0 à 1,5 kg par litre, et de manière préférée entre toutes de 1,05 à 1,06 kg par litre ; ou
facultativement, l'utilisation d'une solution de tanin sous forme liquide à une concentration de 25 % à 60 %, de préférence à une concentration de 45 % à 55 %, et de manière préférée entre toutes à une concentration de 50 % en teneur totale de solides ;
(b) le chauffage du mélange ainsi formé tout en l'agitant vigoureusement à une température entre 50 et 100 °C, de préférence entre 67 et 98 °C ;
(c) le fait d'ajouter lentement un agent de sulfonation au mélange chauffé, à un rapport en poids d'environ 1/100 à environ 1/20 par rapport à l'extrait d'Acacia Negra ; et
(d) l'augmentation de la température du mélange jusqu'à une plage entre 45 et 135 °C, en maintenant une pression entre 0,2 kgf/cm² et 7 kgf/cm² pendant une période comprise entre 1 et 14 heures pour terminer la sulfonation du tanin.

2. Procédé selon la revendication 1, **caractérisé en ce que** ledit rapport extrait poudreux sur eau est de 1,0 à 1,5 kg par litre d'eau.

3. Procédé selon la revendication 2, **caractérisé en ce que** ledit rapport extrait poudreux sur eau est de 1,05 à 1,06 kg par litre.

4. Procédé selon la revendication 1, **caractérisé en ce que** ladite solution de tanin sous forme liquide présente une concentration dans la plage de 45 % à 55 % en teneur totale de solides.

5. Procédé selon la revendication 4, **caractérisé en ce que** ladite solution de tanin sous forme liquide présente une concentration de 50 % en teneur totale de solides.

6. Procédé selon l'une quelconque des revendications 1 à 5, **caractérisé en ce que** l'étape b) est menée à une température dans la plage de 67 à 98 °C.

7. Procédé selon l'une quelconque des revendications 1 à 6, **caractérisé en ce que** ledit agent de sulfonation est choisi parmi l'acide sulfonique, l'acide sulfurique, l'acide naphtalène sulfonique ou leurs mélanges.

8. Procédé selon l'une quelconque des revendications 1 à 7, **caractérisé en ce que** ledit extrait modifié possède des caractéristiques acides et astringentes améliorées avec des taux d'acide dans la plage de 35 à 90 méq H⁺.

9. Procédé selon l'une quelconque des revendications 1 à 8, **caractérisé en ce qu'**il comprend en outre l'étape d'ajout d'un composé à base d'aluminium.

10. Procédé selon la revendication 9, **caractérisé en ce que** ledit composé à base d'aluminium est choisi parmi le sulfate d'aluminium, le chlorure d'aluminium, l'hydroxyde d'aluminium ou leurs mélanges.

11. Procédé selon la revendication 10, **caractérisé en ce que** ledit composé à base d'aluminium est l'hydroxyde d'aluminium.

12. Extrait végétal modifié possédant des propriétés acides et astringentes, **caractérisé en ce qu'**il possède les caractéristiques suivantes :
% d'agents de tannage : 70 à 80
% de matière de non-tannage : 10 à 15
% de matière non soluble : 0 à 2,5
% d'humidité : 5,0 à 7,0 %
pH : 1,5 à 3, 5
acides (méq H⁺) : 35 à 90
sels : 35 à 90
astringence : 4,0 à 8,0.

13. Extrait végétal modifié selon la revendication 12, **caractérisé en ce qu'**il possède les caractéristiques suivantes :
% d'agents de tannage : 76,5
% de matière de non-tannage : 15,3
% de matière non soluble : 2,1
% d'humidité : 6,0
pH : 2,5 à 3,2
acides (méq H⁺) : 42,1
sels : 46,5
astringence : 5,0.

14. Extrait végétal modifié, **caractérisé en ce qu'**il est obtenu en utilisant le procédé selon l'une quelconque des revendications 1 à 11.
